# EUROPÄISCHE PATENTSCHRIFT

(11) **EP 3 884 627 B1**
(45) Veröffentlichungstag und Bekanntmachung des Hinweises auf die Patenterteilung: **08.11.2023**
(21) Anmeldenummer: 19829107.2
(22) Anmeldetag: 17.12.2019
(51) Int. Cl.: H04L 12/40

(54) **BUSFÄHIGE GERÄTEANORDNUNG MIT EINEM SCHALTBAREN ABSCHLUSSWIDERSTAND**
BUS-CAPABLE DEVICE ARRANGEMENT HAVING A SWITCHABLE TERMINATING RESISTOR
AGENCEMENT D'APPAREIL COMPATIBLE BUS MUNI D'UNE RÉSISTANCE TERMINALE COMMUTABLE

(30) Priorität: 18.01.2019 DE 102019101331
(43) Veröffentlichungstag der Anmeldung: 29.09.2021
(73) Patentinhaber: Liebherr-Electronics and Drives GmbH, 88131 Lindau (DE)
(72) Erfinder: SCHULER, Michael, 88400 Biberach (DE)
(74) Vertreter: Thoma, Michael
(86) Internationale Anmeldenummer: PCT/EP2019/085707
(87) Internationale Veröffentlichungsnummer: WO 2020/148059

(56) Entgegenhaltungen:
- DE-A1- 10 261 386
- DE-A1-102013 201 106
- DE-A1-102014 207 389
- US-B1- 7 855 573

## Beschreibung

Die vorliegende Erfindung betrifft allgemein die Terminierung eines Bussystems durch einen schaltbaren Abschlusswiderstand. Die Erfindung betrifft dabei einerseits ein busfähiges Gerät mit einer Eingangsschnittstelle und einer Ausgangsschnittstelle zum Anschließen an einen CAN-Bus mit einem fünfpoligen M12-Steckverbinder, wobei die Eingangs- und Ausgangsschnittstellen jeweils zumindest einen Signalleitungsanschluss aufweisen, sowie ferner mit einem Abschlusswiderstand zum Terminieren des Bussystems und einer Schaltvorrichtung zum Aktivschalten des Abschlusswiderstands in Abhängigkeit des Anschlusszustands der Eingangs- und Ausgangsschnittstellen. Die Erfindung betrifft dabei auch eine Geräteanordnung mit mehreren solchen busfähigen Geräten, die mit ihren Eingangs- und Ausgangsschnittstellen an einen seriellen Bus angeschlossen sind. Andererseits betrifft die Erfindung auch einen Energiespeicher, in dem mehrere der vorgenannten busfähigen Geräte durch einen seriellen Bus miteinander verbunden sind.

In der Energiespeichertechnik werden in jüngerer Zeit Hochleistungsspeicherblöcke verwendet, denen Steuereinrichtungen zugeordnet sind, um das rasche Ein- und Ausspeichern großer Energiemengen zu steuern. Werden mehrere solcher Hochleistungsspeicher parallel geschaltet bzw. zusammen geschaltet, um ein größeres, energieintensives Arbeitsgerät wie beispielsweise eine Baumaschine oder eine Hubvorrichtung wie einen Aufzug elektrifiziert zu betreiben, werden die Steuervorrichtungen der einzelnen Energiespeicher üblicherweise durch ein Bussystem miteinander verbunden, damit die Steuervorrichtungen miteinander kommunizieren und gegebenenfalls von einer übergeordneten Systemsteuerung angesteuert werden können, um beispielsweise eine Vergleichmäßigung des Ladezustands und/oder des Entladens/Ladens der einzelnen Energiespeicher zu erreichen. Das Bussystem kann dabei insbesondere ein serieller Bus wie beispielsweise ein CAN-Bus sein (Controller Area Network Bus), der für die Vernetzung von Steuergeräten verbreitet ist, wobei solche CAN-Busse aber nicht nur für die Vernetzung der Steuergeräte von Energiespeichern, sondern auch für andere Steuergeräte und Anwendungen eingesetzt werden.

Ein solcher CAN- bzw. serieller Bus muss für eine einwandfreie Funktion beim ersten und letzten Teilnehmer mit einem Abschlusswiderstand abgeschlossen bzw. terminiert werden, beispielsweise um eine ausreichende Störfestigkeit zu erzielen und Reflexionen bei höherfrequenten Datenübertragungsraten zu vermeiden. Im Falle eines CAN-Busses, der ein seriell arbeitender Zweidrahtbus mit offener Architektur ist, der als Übertragungsmedium vorwiegend verdrillte Kabel mit einer Nennimpedanz von 120 Ohm verwendet, beträgt bei einem CAN-Bus ein üblicher Abschlusswiderstand bzw. eine übliche Busterminierung etwa 120 Ohm jeweils an den beiden Enden des Busses.

Üblicherweise wird ein solcher Abschlusswiderstand bei der Montage des Bussystems manuell angebracht. Ein Installateur kann beispielsweise einen Stecker mit einem solchen Abschlusswiderstand in die unverbunden bleibende Ausgangsschnittstelle des letzten Teilnehmers sowie in die ebenfalls unverbundene Eingangsschnittstelle des ersten Teilnehmers einstecken, um die Enden des seriellen Busses abzuschließen bzw. zu terminieren. Je nach Einbauumgebung und Montageort kann ein solches manuelles Anbringen eines Abschlusswiderstands-Steckers jedoch aufwendig sein und birgt zudem die Gefahr, dass durch unachtsame Montage die Terminierung vergessen wird. Zum anderen besteht die Problematik, dass beispielsweise bei Energiespeichern die Busschnittstellen keine Normkonfigurierung besitzen, für die es passende Abschlussstecker gäbe.

Um das manuelle Anbringen von Abschlusswiderständen zu vermeiden, wurde bereits angedacht, schaltbare Abschlusswiderstände vorzusehen, die sich durch eine Schaltvorrichtung zu- und wegschalten lassen, je nachdem ob eine Terminierung benötigt oder nicht benötigt wird. Beispielsweise zeigt die Schrift WO 2017/102 479 A1 eine Schaltungsanordnung für einen schaltbaren Leitungsabschluss eines CAN-Busses in einem Kraftfahrzeug, wobei dort zwischen die Signalleitungen des CAN-Busses eine elektronische Schaltvorrichtung mit einem Mikroprozessor geschaltet ist, die einen Abschlusswiderstand an den seriellen Bus schalten und von diesem wegschalten kann. Dabei wird eine mittlere Busspannung des seriellen Busses hochohmig ausgekoppelt und in eine Ansteuerspannung für die Schaltvorrichtung gewandelt, wobei die Schalteinrichtung Feldeffekttransistoren zum Zu- bzw. Abschalten der Abschlusswiderstände verwendet. Über den Mikrokontroller kann das Zu- und Abschalten programmiert werden.

Ferner beschreibt die Schrift DE 20 2013 100 624 U1 feldbusfähige Geräte, die jeweils einen Abschlusswiderstand aufweisen, der zu- und weggeschaltet werden kann. Das Zu- bzw. Wegschalten soll dabei durch einen Steuerbefehl erfolgen, der von einer übergeordneten Steuereinrichtung her über das Bussystem selbst übertragen und an einen jeweiligen Teilnehmer übermittelt wird, was jedoch voraussetzt, dass das Bussystem bereits soweit funktioniert, dass der genannte Steuerbefehl übertragen werden kann.

Ferner beschreibt die DE 10 2013 201 106 A1 ein busfähiges Gerät mit einer Eingangsschnittstelle und einer Ausgangsschnittstelle zum Anschließen an einen CAN-Bus, wobei mehrere solche busfähige Geräte miteinander über CAN vernetzt werden sollen. Dabei kann der Bus über einen schaltbaren Abschlusswiderstand terminiert werden, wenn ein Fehlen der Versorgungsspannung an einer Schnittstelle rückgemeldet wird.

Der vorliegenden Erfindung liegt die Aufgabe zugrunde, ein verbessertes busfähiges Gerät, eine verbesserte Anordnung solcher busfähiger Geräte sowie eine verbesserte Energiespeichervorrichtung der jeweils eingangs genannten Art zu schaffen, die Nachteile des Standes der Technik vermeiden und letzteren in vorteilhafter Weise weiterbilden. Insbesondere soll eine automatische Bus-Terminierung am ersten und letzten Teilnehmer des Bussystems erreicht werden, die manuelles Terminieren und speziell adaptierte Abschlussstecker sowie speziell konfigurierte Verbindungen überflüssig macht und gleichermaßen verlässlich eine Terminierung an dazwischenliegenden Teilnehmern vermeidet.

Erfindungsgemäß wird die genannte Aufgabe durch ein busfähiges Gerät gemäß Anspruch 1, eine durch einen seriellen Bus verbundene Geräteanordnung gemäß Anspruch 12 sowie eine Energiespeichervorrichtung gemäß Anspruch 16 gelöst. Bevorzugte Ausgestaltungen der Erfindung sind Gegenstand der abhängigen Ansprüche.

Es wird also vorgeschlagen, an den busfähigen Geräten eine Selbsterkennung vorzusehen, die das jeweilige Gerät selbst erkennen lässt, ob es ein erster oder letzter Teilnehmer des Bussystems oder ein dazwischenliegender Teilnehmer ist, und in Abhängigkeit der selbsterfassten Teilnehmerstellung bzw. Busposition einen schaltbaren Abschlusswiderstand zu aktivieren und ansonsten deaktiviert zu belassen. Durch eine solche Selbsterkennung an den busfähigen Geräten kann auf eine externe Programmierung und die Übertragung von Steuerbefehlen über das gegebenenfalls noch nicht funktionierende Bussystem verzichtet werden, was das Einrichten des Bussystems verlässlich und einfach macht.

Erfindungsgemäß wird nach einem ersten Aspekt vorgeschlagen, dass die Eingangs- und Ausgangsschnittstellen des busfähigen Geräts jeweils einen vom Signalleitungsanschluss separaten Versorgungsspannungsanschluss zum Bereitstellen einer Versorgungsspannung an die über das Bussystem anzuschließende Eingangs- und/oder Ausgangsschnittstelle eines nächsten busfähigen Geräts, sowie einen Rückmeldungsanschluss zum Empfangen der Versorgungsspannung von einem über das Bussystem verbundenen nächsten busfähigen Geräts aufweist, wobei die Schaltvorrichtung zum Aktivschalten des Abschlusswiderstands eine Auswerteschaltung zum Bestimmen des Anliegens der Versorgungsspannung am Rückmeldeanschluss der Eingangsschnittstelle und am Rückmeldeanschluss der Ausgangsschnittstelle sowie eine Aktivierungsschaltung zum Aktivschalten des Abschlusswiderstands aufweist dann, wenn am Rückmeldeanschluss der Eingangsschnittstelle und am Rückmeldeanschluss der Ausgangsschnittstelle jeweils das Anliegen der Versorgungsspannung von der Auswerteschaltung erfasst ist. Das busfähige Gerät besitzt also eine Eingangsschnittstelle und eine Ausgangsschnittstelle, die jeweils einen separaten Versorgungsspannungsanschluss zum Bereitstellen der Versorgungsspannung an das jeweils nächste angeschlossene Gerät und jeweils einen Rückmeldungsanschluss zum Empfangen der Versorgungsspannung von dem jeweils nächsten angeschlossenen Gerät aufweisen, sodass durch das Anliegen der Versorgungsspannung an den Rückmeldungsanschlüssen der Eingangsschnittstelle und der Ausgangsschnittstelle bestimmt werden kann, ob das Gerät im seriellen Bus der erste oder der letzte Teilnehmer oder ein dazwischenliegender Teilnehmer ist. Liegt die Versorgungsspannung an beiden Rückmeldungsanschlüssen vor, das heißt sowohl an der Eingangsschnittstelle als auch an der Ausgangsschnittstelle, sind beidseitig des Geräts weitere Teilnehmer an den Bus angeschlossen, von denen die Versorgungsspannung her kommt, sodass der Abschlusswiderstand deaktiviert wird bzw. bleiben kann. Liegt indes die Versorgungsspannung am Rückmeldeanschluss der Eingangsschnittstelle und/oder am Rückmeldeanschluss der Ausgangsschnittstelle nicht an, fehlt es zumindest in einer Richtung an einem weiteren, benachbarten Teilnehmer, sodass das jeweilige Gerät der erste oder letzte Teilnehmer im seriellen Bus ist und die Aktivierungsschaltung den Abschlusswiderstand aktiviert.

Die genannten Eingangs- und Ausgangsschnittstellen des busfähigen Geräts können beispielsweise über separate Stecker ausgeführt sein, mittels derer das Gerät eingangsseitig und ausgangsseitig an den Bus angeschlossen werden kann.

Dabei können der Versorgungsspannungsanschluss und/oder der Rückmeldungsanschluss der Eingangsschnittstelle sowie der Versorgungsspannungsanschluss und/oder der Rückmeldungsanschluss der Ausgangsschnittstelle jeweils galvanisch getrennt ausgebildet sein, sodass das Bereitstellen bzw. Empfangen der Versorgungsspannung separat von der Steuersignalübertragung erfolgt. Insbesondere können die genannten Versorgungsspannungs- und Rückmeldungs-Anschlüsse von dem zumindest einem Signalleitungsanschluss der Busschnittstellen getrennt sein.

Das serielle Bussystem ist ein CAN-Bus und die Eingangsschnittstelle und die Ausgangsschnittstelle umfassen zwei Signalleitungsanschlüsse zum Übertragen eines Hochsignals und eines Tiefsignals. Zusätzlich zu diesen CAN-high und CAN-low Signalleitungsanschlüssen umfassen sowohl die Eingangsschnittstelle als auch die Ausgangsschnittstelle die zuvor genannten, insbesondere galvanisch getrennten Versorgungs- und Rückmeldungsanschlüsse.

Vorteilhafterweise kann die Eingangsschnittstelle und die Ausgangsschnittstelle jeweils auch einen Masseanschluss umfassen, der vorteilhafterweise ebenfalls galvanisch getrennt ausgebildet ist.

Vorteilhafterweise verwendet das Bussystem an sich standardisierte mehrpolige Steckverbinder in Form eines fünfpoligen Steckverbinders, der als fünfpoliger M12-Steckverbinder ausgebildet ist, wobei auch standardisierte CAN-Busleitungen in Form von M12-CAN-Busleitungen verwendet werden. Zusätzliche Modifikationen an den Steckverbindern können vermieden werden.

Die Auswerteschaltung, mittels derer das Anliegen der Versorgungsspannung an den beiden Rückmeldeanschlüssen der Eingangs- und Ausgangsschnittstellen bestimmt wird, kann grundsätzlich verschieden aufgebaut sein und beispielsweise eine Sensorik wie einen Strom- und/oder Spannungssensor zum Erfassen der Versorgungsspannung am Rückmeldeanschluss aufweisen. In vorteilhafter Weiterbildung der Erfindung jedoch kann die Auswerteschaltung zwei in Serie geschaltete Schaltelemente und/oder Halbleiterbauelemente aufweisen, von denen das eine Schaltelement die Versorgungsspannung am Rückmeldeanschluss der Eingangsschnittstelle und das andere Schaltelement die Versorgungsspannung am Rückmeldeanschluss der Ausgangsschnittstelle als Stell- und/oder Schaltsignal erhält, wobei die Schaltelemente je nach Anliegen oder Nichtanliegen der Versorgungsspannung ein Stellsignal durchschalten oder sperren. Durch die Serienschaltung der beiden Schaltelemente wird das Stellsignal nur dann durchgeschaltet, wenn an beiden Rückmeldeanschlüssen die Versorgungsspannung anliegt, das heißt sowohl an der Eingangsschnittstelle als auch an der Ausgangsschnittstelle jeweils ein weiteres busfähiges Gerät angeschlossen ist. Das genannte Stellsignal wird dann dazu verwendet, den Abschlusswiderstand zu deaktivieren.

Die an den Rückmeldeanschlüssen anliegende Versorgungsspannung muss nicht direkt als Eingangssignal auf die genannten Schaltelemente gegeben werden, sondern kann gegebenenfalls vorher bearbeitet oder transformiert werden, beispielsweise durch das Vorschalten von Widerständen.

Die beiden in Serie geschalteten Schaltelemente können vorteilhafterweise Feldeffekttransistoren sein bzw. Feldeffekttransistoren umfassen. Insbesondere können als Schaltelemente MOSFETs verwendet werden. Ein solcher MOSFET (Metal-Oxide-Semiconductor-Field-Effect-Transistor) ist ein Metalloxidhalbleiter-Feldeffekttransistor und gehört zu den generell verwendbaren Metallisolatorhalbleiter-Feldeffekttransistoren, die bisweilen auch als MISFET bezeichnet werden. Obwohl heute oftmals dotiertes Polysilizium als Gate-Material Verwendung findet, wird dennoch die Bezeichnung MOSFET beibehalten, auch wenn dies mangels metallischen Gate-Materials an sich nicht mehr korrekt ist.

Solche Feldeffekttransistoren sind weitgehend leistungs- bzw. verlustlos schaltbar, sodass der Abschlusswiderstand auch mit einer kleinen Versorgungsspannung, die vom Versorgungsanschluss der einen Schnittstelle her an den Rückmeldeanschluss der anderen Schnittstelle übertragen wird, der Abschlusswiderstand aktiviert bzw. deaktiviert werden kann.

Die in Serie geschalteten Feldeffekttransistoren können insbesondere eine Versorgungsspannung, die der Auswerteschaltung bzw. der Aktivierschaltung über einen Versorgungsspannungsanschluss der Schaltvorrichtung bereitgestellt wird, als Stellsignal durchschalten, mit welchem Stellsignal dann die Aktivierschaltung den Abschlusswiderstand deaktiviert bzw. aktiviert.

Insbesondere kann den beiden in Serie geschalteten Feldeffekttransistoren von einer Seite her die Versorgungsspannung zugeführt werden, während die andere Seite der beiden in Serie geschalteten Feldeffekttransistoren an die Masse geschaltet ist, sodass bei durchgeschalteten Halbleitertransistoren die Versorgungsspannung auf die Masse gezogen wird.

Ist einer der beiden Feldeffekttransistoren indes nicht durchgeschaltet, weil an einem der Rückmeldeanschlüsse der Eingangs- und Ausgangsschnittstellen die Versorgungsspannung fehlt, wird die Versorgungsspannung der Schaltvorrichtung nicht auf Masse gezogen, sondern kann als Stellsignal an ein Schaltrelais gegeben werden, welches den Abschlusswiderstand dann aktivieren kann.

Das genannte Schaltrelais zum Aktivieren und Deaktivieren des Abschlusswiderstands kann zwischen dem Versorgungsanschluss der Schaltvorrichtung einerseits und den beiden in Serie geschalteten Feldeffekttransistoren andererseits geschaltet sein, um in der genannten Weise in Abhängigkeit des Schaltzustandes der Feldeffekttransistoren von der Versorgungsspannung beaufschlagt zu werden bzw. nicht beaufschlagt zu werden.

Das genannte Schaltrelais kann dabei grundsätzlich verschieden ausgebildet sein, wobei nach einer vorteilhaften Ausführung der Erfindung ein optisches Schaltrelais Verwendung finden kann, insbesondere ein optisches Relais mit niedrigem Durchlasswiderstand am Ausgang.

Beispielsweise kann eine optische LED im Eingang des Relais über einen Vorwiderstand bzw. mehrere Vorwiderstände mit Strom versorgt werden, wobei als Versorgungsspannung die galvanisch getrennte Versorgungsspannung der Schaltvorrichtung dienen kann.

Zusätzlich zu dem zumindest einen Vorwiderstand können am Eingang des Relais die beiden vorgenannten Feldeffekttransistoren, insbesondere MOSFETS, angeschlossen sein.

Ausgangsseitig ist an das optische Relais der Abschlusswiderstand 12 angebunden, der je nach Schaltstellung des Relais aktiviert bzw. deaktiviert ist. Der genannte Abschlusswiderstand kann über das optische Relais, je nach dessen Schaltzustand, die beiden Signalleitungen des seriellen Bussystems bzw. die beiden Signalleitungsanschlüsse der Eingangsschnittstelle und/oder der Ausgangsschnittstelle, also die CAN-High- und CAN-Low-Leitung des CAN-Bussystems, terminieren oder nicht terminieren.

Zum Aufbau des seriellen Bussystems werden mehrere busfähige Geräte der beschriebenen Art miteinander verbunden bzw. jeweils an die Busleitung angeschlossen, wobei jedes Gerät einerseits mit seiner Eingangsschnittstelle und andererseits seiner Ausgangsschnittstelle angeschlossen wird, sodass die Ausgangsschnittstelle eines ersten Geräts mit der Eingangsschnittstelle eines zweiten Geräts verbunden wird, welches zweite Gerät wiederum mit seiner Ausgangsschnittstelle mit der Eingangsschnittstelle eines dritten Geräts verbunden wird. Werden in der genannten Weise drei Geräte an dem Bus zusammengefasst, bleibt beim ersten Gerät die Eingangsschnittstelle unverbunden und bleibt beim dritten Gerät die Ausgangsschnittstelle unverbunden. Über die Versorgungsspannungsanschlüsse gibt das erste Gerät, dort dessen Ausgangsschnittstelle, die Versorgungsspannung an den Rückmeldeanschluss des zweiten Geräts. Umgekehrt gibt das zweite Gerät durch den Versorgungsspannungsanschluss an seiner Eingangsschnittstelle die Versorgungsspannung an die Ausgangsschnittstelle des ersten Geräts.

In ähnlicher Weise versorgt die Ausgangsschnittstelle des zweiten Geräts den Rückmeldeanschluss des dritten Geräts der Versorgungsspannung, wobei das genannte dritte Gerät über seine Eingangsschnittstelle den Rückmeldeanschluss der Ausgangsschnittstelle des zweiten Geräts mit der Versorgungsspannung belegt. Am dritten Gerät bleibt indes der Rückmeldeanschluss an der Ausgangsschnittstelle ohne Versorgungsspannung.

Dementsprechend fehlt dem ersten Gerät die Versorgungsspannung am Rückmeldeanschluss der Eingangsschnittstelle, und fehlt dem dritten Gerät die Versorgungsspannung am Rückmeldeanschluss der Ausgangsschnittstelle. Das zweite Gerät indes hat an den Rückmeldeanschlüssen von Eingangsschnittstelle und Ausgangsschnittstelle jeweils die Versorgungsspannung anliegen.

Dementsprechend erkennt die Auswerteschaltung des zweiten Geräts, dass es ein dazwischenliegendes Gerät ist, dessen Anschlusswiderstand nicht aktiviert werden muss. Die beiden erläuterten MOSFETs des zweiten Geräts schalten die Versorgungsspannung auf die Masse durch, sodass das Schaltrelais den Abschlusswiderstand nicht aktiviert.

Andererseits bleiben beim ersten Gerät und beim dritten Gerät jeweils einer der beiden Feldeffekttransistoren ohne Eingangssignal nicht durchgeschaltet, sodass die Versorgungsspannung nicht auf die Masse gezogen wird. Dies treibt die jeweiligen Schaltrelais in die Aktivierstellung, um den Abschlusswiderstand zu aktivieren.

Besonders vorteilhaft lässt sich die Selbsterkennungsvorrichtung an den Bausteinen einer Energiespeichervorrichtung einsetzen, wobei eine solche Energiespeichervorrichtung mehrere Energiespeicherzellen, insbesondere an sich autarke Energiespeicherzellen umfassen kann, die über einen seriellen Bus miteinander gekoppelt sind. Die jeweiligen Energiespeicherzellen können dabei eine Steuervorrichtung beispielsweise umfassend einen Mikroprozessor und einen Programmspeicher umfassen, welche Steuervorrichtung der Energiespeicherzellen über den seriellen Bus aneinander gekoppelt werden. Gegebenenfalls kann dabei auch eine übergeordnete Systemsteuerung an den Bus angebunden werden.

Die genannten Energiespeicherzellen können vorteilhafterweise einen oder mehrere Speicherblöcke umfassen, die jeweils einen oder mehrere Speicherkondensatoren umfassen können, insbesondere in Form von Doppelschichtkondensatoren. Den Speicherblöcken sind dabei Stromsteller zugeordnet, insbesondere in Form von bidirektionalen DC-DC-Stellern, mittels derer das Einspeisen und Ausspeichern von elektrischer Energie in die bzw. aus den Speicherblöcken gesteuert werden kann. Die zuvor genannten Steuervorrichtungen der Energiespeicherzellen können insbesondere die genannten Stromsteller steuern und auch mit den Kondensatorspeichern verbunden sein, beispielsweise um deren Ladungszustand zu erfassen.

Die vorliegende Erfindung wird nachfolgend anhand eines bevorzugten Ausführungsbeispiels und zugehöriger Zeichnungen näher erläutert. In den Zeichnungen zeigen:
- Fig. 1:: ein busfähiges Gerät mit einer Bus-Eingangsschnittstelle und einer Bus-Ausgangsschnittstelle sowie einer Schaltvorrichtung zum Zuschalten und Abschalten eines Abschlusswiderstands zum Terminieren des an die Eingangs- und Ausgangsschnittstellen anschließbaren Busses,
- Fig. 2:: die Verschaltung mehrerer busfähiger Geräte, die jeweils mit einer Schaltvorrichtung zum automatischen Zu- und Abschalten eines Abschlusswiderstands versehen sind.

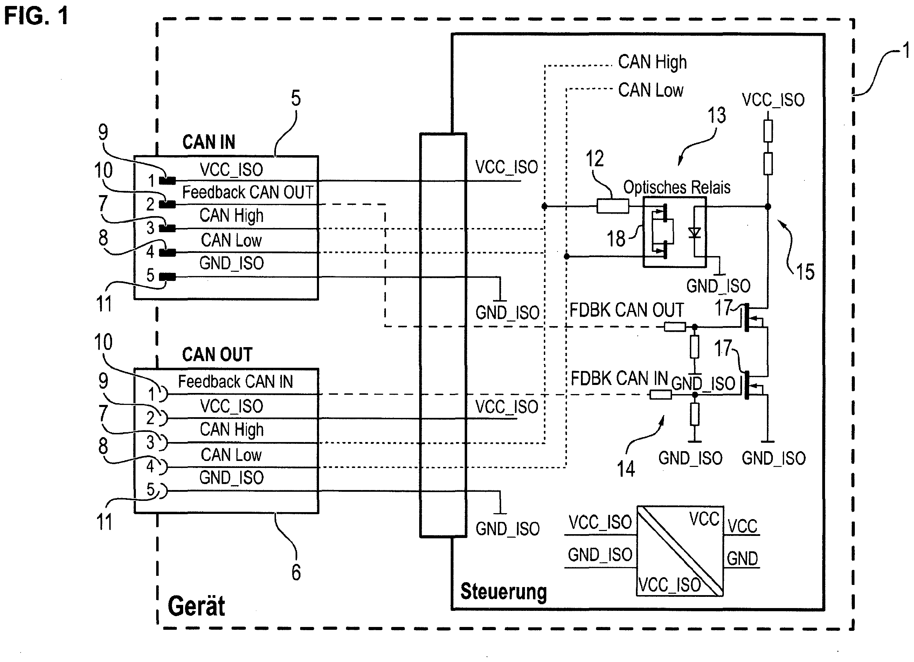

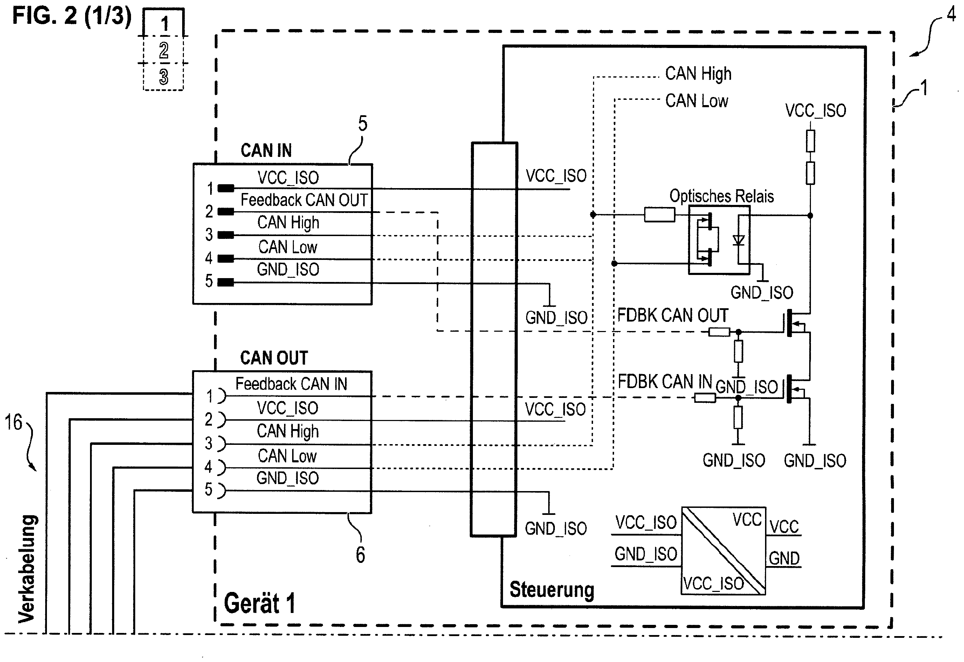

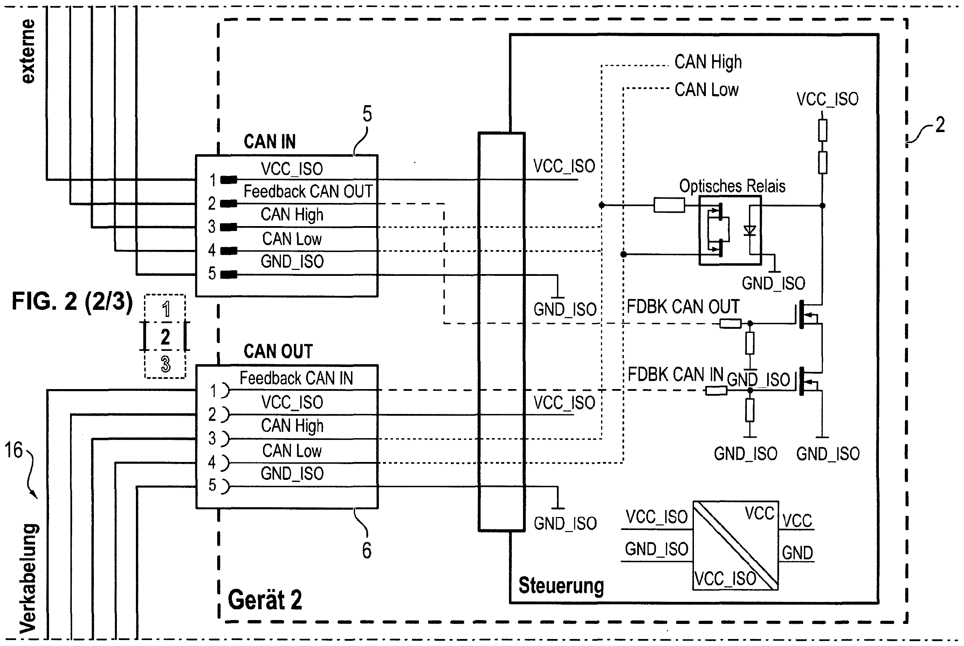

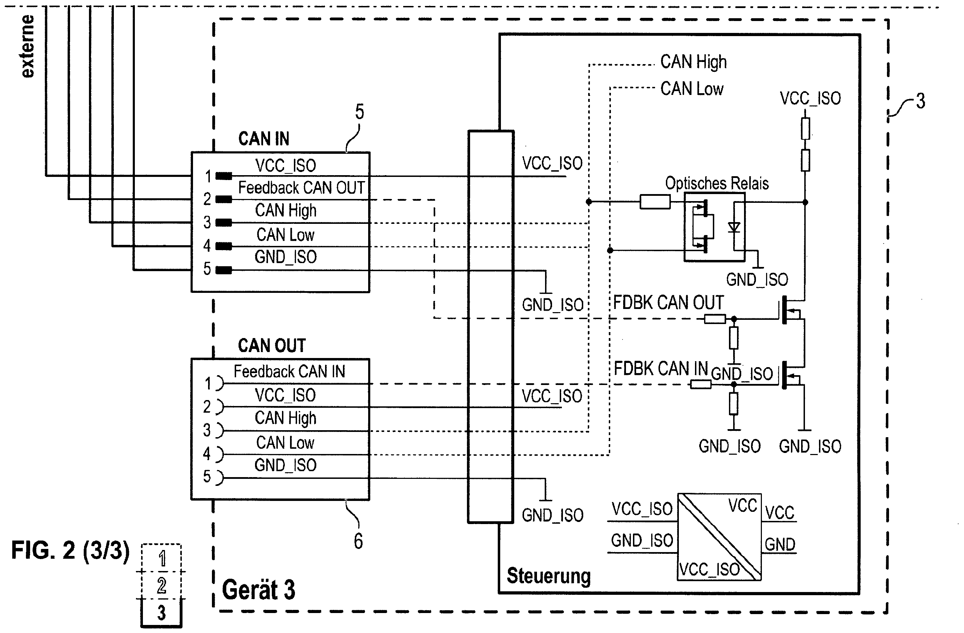

Wie Figur 1 zeigt, kann ein busfähiges Gerät - ebenso wie die weiteren busfähigen Geräte 2 und 3 in Figur 2 - jeweils eine Eingangsschnittstelle 5 und eine Ausgangsschnittstelle 6 aufweisen, die in Form von Steckern ausgebildet sind und separat an einen seriellen Bus 16 in Form eines CAN-Buses angesteckt bzw. angebunden werden können.

Jede der Eingangs- und Ausgangsschnittstellen 5 und 6 umfasst dabei jeweils zwei Signalleitungsanschlüsse 7 und 8, um an die beiden Signalleitungen eines seriellen Busses 16 in Form eines CAN-Busses an dessen CAN-High- und CAN-Low-Leitungen angeschlossen zu werden.

Zusätzlich zu den beiden Signalleitungsanschlüssen 7 und 8 umfasst jede der Eingangs- und Ausgangsschnittstellen 5 und 6 ferner einen Versorgungsspannungsanschluss 9, um eine Versorgungsspannung an die Schnittstelle des jeweils nächsten Geräts bereitzustellen, und einen Rückmeldeanschluss 10, mithilfe dessen die von einem nächsten Gerät bereitgestellte Versorgungsspannung abgegriffen bzw. empfangen werden kann. Die genannten Versorgungs- und Rückmeldeanschlüsse 9 und 10 sind dabei vorteilhafterweise jeweils galvanisch getrennt ausgebildet und/oder von den Signalleitungsanschlüssen 7 und 8 elektrisch isoliert.

Zusätzlich zu den genannten Versorgungs- und Rückmeldeanschlüssen 9 und 10 umfasst jede der Eingangs- und Ausgangsschnittstellen 5 und 6 ferner vorteilhafterweise einen Masseanschluss 11, der vorteilhafterweise ebenfalls galvanisch getrennt ausgebildet bzw. von den übrigen Anschlüssen elektrisch isoliert ist.

Wie Figur 1 und 2 zeigen, sind die Versorgungsanschlüsse 9 und Rückmeldeanschlüsse 10 an der Eingangsschnittstelle 5 und der Ausgangsschnittstelle 6 zueinander komplementär angeordnet derart, dass der Versorgungsspannungsanschluss 9 der Eingangsschnittstelle 5 mit dem Rückmeldeanschluss 10 einer Ausgangsschnittstelle 6 des nächsten Geräts in Verbindung kommt, während der Rückmeldeanschluss 10 der Eingangsschnittstelle 5 mit dem Versorgungsanschluss 9 der Ausgangsschnittstelle des nächsten angebundenen Geräts in Verbindung kommt. Mit anderen Worten ist die Anordnung der Versorgungs- und Rückmeldeanschlüsse 9 und 10 derart getroffen, dass der Rückmeldeanschluss der Eingangsschnittstelle die Versorgungsspannung von der Ausgangsschnittstelle eines nächsten Geräts empfängt und der Rückmeldeanschluss der Ausgangsschnittstelle die Versorgungsspannung von der Eingangsschnittstelle eines nächsten Geräts erhält, vgl. Figur 2.

Die Signalleitungsanschlüsse 7 und 8 sowie der Masseanschluss 11 sind indes gleichartig angeordnet, sodass jede Schnittstelle gleichermaßen an die Masse angeschlossen wird und der CAN-High-Anschluss an die CAN-High-Leitung und der CAN-Low-Anschluss an die CAN-Low-Leitung.

Wie Figur 1 und auch Figur 2 verdeutlichen, werden die an den Rückmeldeanschlüssen 10 der Eingangsschnittstelle 5 und Ausgangsschnittstelle 6 empfangenen Signale in Form der gegebenenfalls empfangenen Versorgungsspannung auf eine Auswerteschaltung 14 gegeben, die zwei in Serie geschaltete Schaltelemente 17 vorzugsweise in Form von Feldeffekttransistoren umfasst. Die genannten Schaltelemente 17 können insbesondere sogenannte MOSFETs sein.

Wie Figur 1 zeigt, können die an den Rückmeldeanschlüssen 10 empfangenen Versorgungsspannungen über einen Vorwiderstand als Eingangssignal bzw. Schaltsignal an die genannten MOSFETs 17 gegeben werden, wobei das eine Schaltelement 17 mit dem Rückmeldeanschluss 10 der Eingangsschnittstelle 5 verbunden ist, während das andere Schaltelement 17 der beiden in Serie geschalteten Elemente mit dem Rückmeldeanschluss 10 der Ausgangsschnittstelle 6 verbunden ist.

Die Feldeffekttransistorenstufe umfassend die beiden MOSFETs 17 ist einerseits an die Masse angebunden, vgl. den Masseanschluss 11 - 17, während das andere Ende der seriell geschalteten Schaltelemente 17 an die Versorgungsspannung angebunden ist.

Sind die beiden Feldeffekttransistoren 17 durchgeschaltet, was bei Anliegen der Versorgungspannung an beiden Rückmeldeanschlüssen 10 der beiden Eingangs- und Ausgangsschnittstellen 5 und 6 der Fall ist, wird die Versorgungsspannung auf die Masse gezogen. Bleibt indes eines der beiden Schaltelemente 17 oder bleiben beide Schaltelemente gesperrt, wird die Versorgungsspannung nicht auf die Masse gezogen und treibt dementsprechend ein Schaltrelais 18 in eine andere Schaltstellung.

Das genannte Relais 18 ist Teil einer Aktivierschaltung 15, mittels derer ein am Gerät vorgesehener Abschlusswiderstand 12 aktiviert bzw. deaktiviert werden kann. Das genannte Relais 18 kann dabei insbesondere ein optisches Relais sein und eingangsseitig einen Vorwiderstand bzw. mehrere Vorwiderstände aufweisen, vgl. Figur 1.

Je nachdem, ob die Versorgungsspannung über die Schaltelemente 17 auf die Masse gezogen wird oder nicht auf die Masse gezogen wird, schaltet das genannte Relais 18 den Ausgangsseitig angebundenen Abschlusswiderstand 12 auf die beiden Signalleitungsanschlüsse 7 und 8.

Eingangsseitig ist das Relais 18 an die Verbindungsstrecke zwischen Versorgungsspannung und Masse angebunden, und zwar vorteilhafterweise zwischen Versorgungsspannungsanschluss und den beiden in Serie geschalteten Schaltelementen 17, vgl. Figur 1.

Wie Figur 2 zeigt, können mehrere solcher busfähiger Geräte 1, 2 und 3 seriell an den Bus 16 angebunden werden, wobei jedoch nur das mittlere Gerät 2 sowohl mit seiner Eingangsschnittstelle 5 als auch mit seiner Ausgangsschnittstelle 6 an den Bus 16 angeschlossen ist. Bei dem ersten Gerät 1 bleibt die Eingangsschnittstelle 5 unverbunden und es ist nur die Ausgangsschnittstelle 6 an den Bus 16 angeschlossen. Bei dem letzten bzw. dritten Gerät 3 ist die Eingangsschnittstelle 5 angeschlossen, während die Ausgangsschnittstelle 6 unverbunden bleibt.

Dementsprechend empfängt die Eingangsschnittstelle 5 des ersten Geräts 1 an ihrem Rückmeldeanschluss 10 - mangels Anschluss eines weiteren Geräts - nicht die Versorgungsspannung, sodass der an den Rückmeldeanschluss 10 der Eingangsschnittstelle 5 angebundene MOSFET 17 nicht durchschaltet und dementsprechend die Versorgungsspannung nicht auf die Masse gezogen wird. Hierdurch wird das Relais 18 in die Aktivstellung geschaltet, in der der Abschlusswiderstand 12 aufgeschaltet ist.

Analog fehlt es der Ausgangsschnittstelle 6 des dritten bzw. letzten Geräts 3 am Rückmeldeanschluss 10 an einer dort eingehenden Versorgungsspannung, sodass der an die Ausgangsschnittstelle 6 bzw. deren Rückmeldeanschluss 10 angebundene MOSFET 17 gesperrt bleibt und ebenfalls die Versorgungsspannung nicht auf die Masse gezogen wird. Hierdurch bleibt auch beim dritten Gerät 3 die Versorgungsspannung auf das Relais 18 geschaltet, welches dementsprechend den Abschlusswiderstand 12 des dritten Geräts 3 aktiviert.

Beim zweiten Gerät 2 indes liegt sowohl am Rückmeldeanschluss 10 der Eingangsschnittstelle 5 als auch am Rückmeldeanschluss 10 der Ausgangsschnittstelle 6 die Versorgungsspannung an, sodass beide MOSFETs 17 durchschalten und die Versorgungsspannung auf die Masse ziehen. Dementsprechend bleibt der Abschlusswiderstand 12 deaktiviert.

Die in Figur 2 gezeigten busfähigen Geräte 1, 2 und 3 können insbesondere Energiespeicherzellen sein, die jeweils einen Speicherblock umfassen, einen Kondensatorspeicher, insbesondere einen Doppelschichtkondensator, sowie einen bidirektionalen DC-DC-Steller umfassen können. Solche Energiespeicherzellen können ferner jeweils eine lokale bzw. interne Steuervorrichtung aufweisen, die die Speicherblöcke und DC-DC-Steller steuert und über die genannten Eingangs- und Ausgangsschnittstellen 5 und 6 an den Bus 16 angebunden wird.

Dabei kann vorteilhafterweise vorgesehen sein, dass die Schaltvorrichtung 13 einschließlich Auswerteschaltung 14 und Aktivierschaltung 15 und der Abschlusswiderstand 12 in die jeweilige Energiespeicherzelle, das heißt in das jeweilige Gerät 1, 2 bzw. 3 integriert ist, insbesondere im Inneren des Gehäuses der Energiespeicherzelle untergebracht ist.

## Patentansprüche

1. Busfähiges Gerät mit einer Eingangsschnittstelle (5) und einer Ausgangsschnittstelle (6) zum Anschließen an einen CAN-Bus, wobei die Eingangsschnittstelle (5) und die Ausgangsschnittstelle (6) jeweils zumindest einen Signalleitungsanschluss (7, 8) aufweisen, sowie ferner mit einem Abschlusswiderstand (12) zum Terminieren des Busses (16) und einer Schaltvorrichtung (13) zum Aktivschalten des Abschlusswiderstands (12) in Abhängigkeit des Anschlusszustands der Eingangs- und Ausgangsschnittstellen (5, 6), wobei die Eingangsschnittstelle (5) und die Ausgangsschnittstelle (6) jeweils einen Versorgungsspannungsanschluss (9) zum Bereitstellen einer Versorgungsspannung an die Ausgangs- und/oder Eingangsschnittstellen eines jeweils nächsten busfähigen Geräts und einen Rückmeldeanschluss (10) zum Empfangen der Versorgungsspannung von einer Ausgangs- und/oder Eingangsschnittstelle eines jeweils nächsten busfähigen Geräts aufweisen, wobei die Schaltvorrichtung (13) eine Auswerteschaltung (14) zum Bestimmen des Anliegens der Versorgungsspannung an den Rückmeldeanschlüssen (10) der Eingangs- und Ausgangsschnittstellen (5, 6) sowie eine Aktivierschaltung (15) zum Aktivschalten des Abschlusswiderstandes (12) aufweist dann, wenn am Rückmeldeanschluss (10) der Eingangsschnittstelle (5) und/oder am Rückmeldeanschluss (10) der Ausgangsschnittstelle (6) von der Auswerteschaltung (14) das Fehlen der Versorgungsspannung festgestellt ist, wobei die Eingangsschnittstelle (5) und/oder die Ausgangsschnittstelle (6) einen fünfpoligen Steckverbinder in Form eines fünfpoligen M12-Steckverbinders aufweist, und dass der CAN-Bus in Form von M12-CAN-Busleitungen ist.

2. Busfähiges Gerät nach dem vorhergehenden Anspruch, wobei der Versorgungsspannungsanschluss (9) und/oder der Rückmeldeanschluss (10) der Eingangsschnittstelle (5) und/oder der Ausgangsschnittstelle (6) galvanisch getrennt ausgebildet ist und/oder von dem Signalleitungsanschluss (7, 8) elektrisch isoliert ist.

3. Busfähiges Gerät nach einem der vorhergehenden Ansprüche, wobei die Eingangsschnittstelle (5) und die Ausgangsschnittstelle (6) jeweils zwei Signalleitungsanschlüsse (7, 8) umfassen.

4. Busfähiges Gerät nach einem der vorhergehenden Ansprüche, wobei die Eingangsschnittstelle (5) und die Ausgangsschnittstelle (6) jeweils einen Masseanschluss (11), insbesondere einen galvanisch getrennt ausgebildeten Masseanschluss, aufweisen.

5. Busfähiges Gerät nach einem der vorhergehenden Ansprüche, wobei die Versorgungs- und Rückmeldeanschlüsse (9 und 10) an den Eingangs- und Ausgangsschnittstellen (5, 6) derart angeordnet sind, dass der Versorgungsanschluss (9) der Eingangsschnittstelle (5) mit dem Rückmeldeanschluss (10) der Ausgangsschnittstelle (6) eines nächsten an den Bus (16) anzuschließenden Geräts verschaltet wird, der Rückmeldeanschluss (10) der Eingangsschnittstelle (5) mit dem Versorgungsanschluss (9) der Ausgangsschnittstelle des nächsten anzuschließenden Geräts verschaltet wird, der Versorgungsanschluss (9) der Ausgangsschnittstelle (6) mit dem Rückmeldeanschluss der Eingangsschnittstelle eines nächsten anzuschließenden Geräts verschaltet wird, und der Rückmeldeanschluss (10) der Ausgangsschnittstelle (6) mit dem Versorgungsanschluss einer Eingangsschnittstelle eines nächsten anzuschließenden Geräts verschaltet wird.

6. Busfähiges Gerät nach einem der vorhergehenden Ansprüche, wobei die Auswerteschaltung (14) zwei in Serie geschaltete Schaltelemente (17) umfasst, von denen ein Schaltelement (17) mit dem Rückmeldeanschluss (10) der Eingangsschnittstelle (5) verbunden ist und das andere Schaltelement (17) mit dem Rückmeldeanschluss (10) der Ausgangsschnittstelle (6) verbunden ist.

7. Busfähiges Gerät nach dem vorhergehenden Anspruch, wobei die beiden Schaltelemente (17) jeweils einen Feldeffekttransistor, insbesondere in Form eines MOSFETs, umfassen, wobei die Feldeffekttransistoren jeweils die am jeweiligen Rückmeldeanschluss (10) anliegende Versorgungsspannung oder ein davon abgeleitetes Spannungssignal als Eingangssignal empfangen.

8. Busfähiges Gerät nach einem der beiden vorhergehenden Ansprüche, wobei die beiden Schaltelemente (17) einen Versorgungsspannungsanschluss der Aktivierschaltung (15) auf Masse ziehen, wenn beide Schaltelemente (17) durchgeschaltet sind, oder von der Masse absperren, wenn zumindest eines der Schaltelemente (17) nicht durchgeschaltet ist.

9. Busfähiges Gerät nach einem der vorhergehenden Ansprüche, wobei die Aktivierschaltung (15) ein Relais (18) aufweist, welches eingangsseitig an die Verbindungsstrecke zwischen einem Versorgungsspannungsanschluss und den beiden in Serie geschalteten Schaltelementen (17) angebunden ist.

10. Busfähiges Gerät nach dem vorhergehenden Anspruch, wobei das Relais (18) als optisches Relais ausgebildet ist, das einen Eingangswiderstand aufweist, der an die Verbindungsstrecke zwischen dem Versorgungsspannungsanschluss und den beiden in Serie geschalteten Schaltelementen (17) angebunden ist.

11. Busfähiges Gerät nach einem der vorhergehenden Ansprüche, wobei die Aktivierschaltung (15) ausgangsseitig mit dem Abschlusswiderstand (12) verbunden ist, der über die Aktivierschaltung (15) mit den beiden Signalleitungsanschlüssen (7, 8) der Eingangs- und Ausgangsschnittstellen (5, 6) verbindbar ist.

12. Geräteanordnung umfassend eine Mehrzahl von busfähigen Geräten (1, 2, 3), die jeweils einem der vorhergehenden Ansprüche ausgebildet sind.

13. Geräteanordnung nach dem vorhergehenden Anspruch, wobei ein erstes der mehreren busfähigen Geräte (1) mit seiner Ausgangsschnittstelle (6) mit der Eingangsschnittstelle (5) eines zweiten busfähigen Geräts verbunden ist, welches mit seiner Ausgangsschnittstelle (6) wiederum mit der Eingangsschnittstelle (5) eines dritten Geräts (3) verbunden ist, wobei die Eingangs- und Ausgangsschnittstellen derart miteinander verbunden sind, dass ...

14. Geräteanordnung nach dem vorhergehenden Anspruch, wobei die mehreren busfähigen Geräte (1, 2, 3) jeweils eine Energiespeicherzelle bilden und/oder in eine Energiespeicherzelle integriert sind.

15. Geräteanordnung nach dem vorhergehenden Anspruch, wobei die Energiespeicherzelle jeweils zumindest einen Speicherblock umfassend einen Kondensatorspeicher, insbesondere Doppelschichtkondensator, sowie einen Stromsteller, insbesondere einen bidirektionalen DC-DC-Steller, aufweist und eine Steuervorrichtung umfasst, die an den Speicherblock und/oder den Stromsteller angebunden ist, wobei die genannte Steuervorrichtung über jeweils eine Eingangsschnittstelle (5) und Ausgangsschnittstelle (6) an den Bus (16) angebunden ist.

16. Energiespeichervorrichtung umfassend mehrere Energiespeicherzellen, die jeweils zumindest einen Speicherblock umfassend einen Kondensatorspeicher sowie einen Stromsteller umfassend einen bipolaren DC-DC-Steller aufweisen, wobei jede Speicherzelle eine Steuervorrichtung zum Steuern des Speicherblocks und/oder des DC-DC-Stellers aufweist, welche Steuervorrichtung jeweils eine Eingangsschnittstelle (5) und eine Ausgangsschnittstelle (6) zum Anschließen an einen seriellen Bus (16) aufweist, **dadurch gekennzeichnet, dass** jede Energiespeicherzelle als busfähiges Gerät gemäß einem der Ansprüche 1 bis 11 ausgebildet ist.

## Claims

1. Bus-capable device having an input interface (5) and an output interface (6) for connection to a CAN bus, wherein the input interface (5) and the output interface (6) each have at least one signal line connection (7, 8), and further having a terminating resistor (12) for terminating the bus (16) and a switching apparatus (13) for switching the terminating resistor (12) active depending on the connection status of the input and output interfaces (5, 6), wherein the input interface (5) and output interface (6) each have a supply voltage connection (9) for providing a supply voltage to the output and/or input interfaces of a respectively next bus-capable device and a feedback connection (10) for receiving the supply voltage from an output and/or input interface of a respectively next bus-capable device, wherein the switching apparatus (13) has an evaluation circuit (14) for determining the presence of the supply voltage at the feedback connections (10) of the input and output interfaces (5, 6) and an activation circuit (15) for switching the terminating resistor (12) active when the absence of the supply voltage is determined by the evaluation circuit (14) at the feedback connection (10) of the input interface (5) and/or at the feedback connection (10) of the output interface (6), wherein the input interface (5) and/or the output interface (6) has a five-pin connector in the form of a five-pin M12 connector, and the CAN bus is in the form of M12 CAN bus lines.

2. Bus-capable device according to the preceding claim, wherein the supply voltage connection (9) and/or the feedback connection (10) of the input interface (5) and/or of the output interface (6) is formed galvanically separated and/or is electrically isolated from the signal line connection (7, 8).

3. Bus-capable device according to one of the preceding claims, wherein the input interface (5) and the output interface (6) each comprise two signal line connections (7, 8).

4. Bus-capable device according to any one of the preceding claims, wherein the input interface (5) and the output interface (6) each have a ground connection (11), in particular a ground connection that is formed galvanically separated.

5. Bus-capable device according to any one of the preceding claims, wherein the supply and feedback connections (9 and 10) at the input and output interfaces (5, 6) are arranged so that the supply connection (9) of the input interface (5) is wired to the feedback connection (10) of the output interface (6) of a next device to be connected to the bus (16), the feedback connection (10) of the input interface (5) is wired to the supply connection (9) of the output interface of the next device to be connected, the supply connection (9) of the output interface (6) is wired to the feedback connection of the input interface of a next device to be connected and the feedback connection (10) of the output interface (6) is wired to the supply connection of an input interface of a next device to be connected.

6. Bus-capable device according to any one of the preceding claims, wherein the evaluation circuit (14) comprises two switching elements (17) connected in series, of which one switching element (17) is connected to the feedback connection (10) of the input interface (5) and the other switching element (17) is connected to the feedback connection (10) of the output interface (6).

7. Bus-capable device according to any one of the preceding claims, wherein the two switching elements (17) each comprise a field effect transistor, in particular in the form of a MOSFET, wherein the field effect transistors each receive the supply voltage present at the respective feedback connection (10) or a voltage signal derived therefrom as an input signal.

8. Bus-capable device according to one of the two preceding claims, wherein the two switching elements (17) connect a supply voltage connection of the activation circuit (15) to ground when both switching elements (17) are switched through or disconnect it from ground when at least one of the switching elements (17) is not switched through.

9. Bus-capable device according to any one of the preceding claims, wherein the activation circuit (15) has a relay (18), which is connected on the input side to the connecting section between a supply voltage connection and the two switching elements (17) connected in series.

10. Bus-capable device according to the preceding claim, wherein the relay (18) is designed as an optical relay, which has an input resistor, which is connected to the connecting section between the supply voltage connection and the two switching elements (17) connected in series.

11. Bus-capable device according to any one of the preceding claims, wherein the activation circuit (15) is connected on the output side to the terminating resistor (12), which can be connected via the activation circuit (15) to the two signal line connections (7, 8) of the input and output interfaces (5, 6).

12. Device arrangement comprising a plurality of bus-capable devices (1, 2, 3), which are each designed according to any one of the preceding claims.

13. Device arrangement according to the preceding claim, wherein a first of the plurality of bus-capable devices (1) is connected by its output interface (6) to the input interface (5) of a second bus-capable device, which is connected by its output interface (6) in turn to the input interface (5) of a third device (3), wherein the input and output interfaces are connected to each other such that...

14. Device arrangement according to the preceding claim, wherein the plurality of bus-capable devices (1, 2, 3) each form an energy storage cell and/or are integrated into an energy storage cell.

15. Device arrangement according to the preceding claim, wherein the energy storage cell has respectively at least one storage block comprising a capacitor store, in particular double-layer capacitor, and a current regulator, in particular a bidirectional DC-DC controller, and comprises a control device, which is connected to the storage block and/or the current regulator, wherein said control device is connected via respectively an input interface (5) and output interface (6) to the bus (16).

16. Energy storage device comprising several energy storage cells, which each have at least one storage block comprising a capacitor store and a current regulator comprising a bipolar DC-DC controller, wherein each storage cell has a control device for controlling the storage block and/or the DC-DC controller, which control device has respectively an input interface (5) and an output interface (6) for connection to a serial bus (16), **characterised in that** each energy storage cell is designed as a bus-capable device according to any one of claims 1 to 11.

## Revendications

1. Appareil compatible bus avec une interface d'entrée (5) et une interface de sortie (6) pour le raccordement à un bus CAN, dans lequel l'interface d'entrée (5) et l'interface de sortie (6) présentent respectivement au moins une borne de ligne de signaux (7, 8), ainsi qu'avec une résistance terminale (12) pour terminer le bus (16) et un dispositif de commutation (13) destiné à activer la résistance terminale (12) en fonction de l'état de raccordement des interfaces d'entrée et de sortie (5, 6), dans lequel l'interface d'entrée (5) et l'interface de sortie (6) présentent respectivement une borne de tension d'alimentation (9) destinée à fournir une tension d'alimentations aux interfaces de sortie et/ou d'entrée d'un appareil compatible bus qui suit respectivement et une borne de rétroaction (10) destinée à recevoir la tension d'alimentation d'une interface de sortie et/ou d'entrée d'un appareil compatible bus qui suit respectivement, dans lequel le dispositif de commutation (13) présente un circuit d'évaluation (14) destiné à définir la présence de la tension d'alimentation sur les bornes de rétroaction (10) des interfaces d'entrée et de sortie (5, 6) ainsi qu'un circuit d'activation (15) pour activer la résistance terminale (12) lorsque l'absence de la tension d'alimentation est constatée par le circuit d'évaluation (14) sur la borne de rétroaction (10) de l'interface d'entrée (5) et/ou sur la borne de rétroaction (10) de l'interface de sortie (6), dans lequel l'interface d'entrée (5) et/ou l'interface de sortie (6) présente un connecteur enfichable à 5 pôles sous la forme d'un connecteur enfichable M12 à 5 pôles, et que le bus CAN est sous la forme de lignes Bus CAN M2.

2. Appareil compatible bus selon la revendication précédente, dans lequel la borne de tension d'alimentation (9) et/ou la borne de rétroaction (10) de l'interface d'entrée (5) et/ou de l'interface de sortie (6) sont réalisées de manière séparée galvaniquement et/ou sont isolées électriquement de la borne de ligne de signaux (7, 8).

3. Appareil compatible bus selon l'une quelconque des revendications précédentes, dans lequel l'interface d'entrée (5) et l'interface de sortie (6) comprennent respectivement deux bornes de ligne de signaux (7, 8).

4. Appareil compatible bus selon l'une quelconque des revendications précédentes, dans lequel l'interface d'entrée (5) et l'interface de sortie (6) présentent respectivement une borne de masse (11), en particulier une borne de masse réalisée de manière séparée galvaniquement.

5. Appareil compatible bus selon l'une quelconque des revendications précédentes, dans lequel les bornes d'alimentation et de rétroaction (9 et 10) sont disposées sur les interfaces d'entrée et de sortie (5, 6) de telle manière que la borne d'alimentation (9) de l'interface d'entrée (5) est branchée avec la borne de rétroaction (10) de l'interface de sortie (6) d'un appareil qui suit à raccorder au bus (16), la borne de rétroaction (10) de l'interface d'entrée (5) est branchée à la borne d'alimentation (9) de l'interface de sortie de l'appareil à raccorder qui suit, la borne d'alimentation (9) de l'interface de sortie (6) est branchée à la borne de rétraction de l'interface d'entrée d'un appareil à raccorder qui suit, et la borne de rétroaction (10) de l'interface de sortie (6) est branchée à la borne d'alimentation d'une interface d'entrée d'un appareil à raccorder qui suit.

6. Appareil compatible bus selon l'une quelconque des revendications précédentes, dans lequel le circuit d'évaluation (14) comprend deux éléments de commutation (17) branchés en série, dont un élément de commutation (17) est raccordé à la borne de rétroaction (10) de l'interface d'entrée (5) et l'autre élément de commutation (17) est raccordé à la borne de rétroaction (10) de l'interface de sortie (6).

7. Appareil compatible bus selon la revendication précédente, dans lequel les deux éléments de commutation (17) comprennent respectivement un transistor à effet de champ, en particulier sous la forme d'un MOSFET, dans lequel les transistors à effet de champ reçoivent respectivement la tension d'alimentation présente sur la borne de rétroaction (10) respective ou un signal de tension dévié de celle-ci en tant que signal d'entrée.

8. Appareil compatible bus selon l'une quelconque des deux revendications précédentes, dans lequel les deux éléments de commutation (17) relient à la masse une borne de tension d'alimentation du circuit d'activation (15) lorsque les deux éléments de commutation (17) sont totalement commutés, ou la coupent de la masse lorsqu'au moins un des éléments de commutation (17) n'est pas totalement commuté.

9. Appareil compatible bus selon l'une quelconque des revendications précédentes, dans lequel le circuit d'activation (15) présente un relais (18), lequel est rattaché côté entrée au tronçon de raccordement entre une borne de tension d'alimentation et les deux éléments de commutation (17) branchés en série.

10. Appareil compatible bus selon la revendication précédente, dans lequel le relais (18) est réalisé en tant que relais optique, qui présente une résistance d'entrée, qui est attaché au tronçon de raccordement entre la borne de tension d'alimentation et les deux éléments de commutation (17) branchés en série.

11. Appareil compatible bus selon l'une quelconque des revendications précédentes, dans lequel le circuit d'activation (15) est raccordé côté sortie à la résistance terminale (12), qui peut être raccordée aux deux bornes de ligne de signaux (7, 8) des interfaces d'entrée et de sortie (5, 6) par l'intermédiaire du circuit d'activation (15).

12. Ensemble d'appareils comprenant une multitude d'appareils compatibles bus (1, 2, 3), qui sont réalisés respectivement selon l'une quelconque des revendications précédentes.

13. Ensemble d'appareils selon la revendication précédente, dans lequel un premier des plusieurs appareils compatibles bus (1) est raccordé par son interface de sortie (6) à l'interface d'entrée (5) d'un deuxième appareil compatible bus, lequel est raccordé par son interface de sortie (6) à son tour à l'interface d'entrée (5) d'un troisième appareil (3), dans lequel les interfaces d'entrée et de sortie sont raccordées entre elles de telle manière que...

14. Ensemble d'appareils selon la revendication précédente, dans lequel les plusieurs appareils compatibles bus (1, 2, 3) forment respectivement une cellule d'accumulation d'énergie et/ou sont intégrés dans une cellule d'accumulation d'énergie.

15. Ensemble d'appareils selon la revendication précédente, dans lequel la cellule d'accumulation d'énergie présente respectivement au moins un bloc de stockage, comprenant un condensateur-accumulateur, en particulier un condensateur à double couche, ainsi qu'un variateur, en particulier un variateur CC-CC bidirectionnel, et comprend un dispositif de commande, qui est rattaché au bloc d'accumulation et/ou au variateur, dans lequel ledit dispositif de commande est rattaché au bus (16) par l'intermédiaire respectivement de l'interface d'entrée (5) et de l'interface de sortie (6).

16. Dispositif d'accumulation d'énergie comprenant plusieurs cellules d'accumulation d'énergie, qui présentent respectivement au moins un bloc d'accumulation comprenant un condensateur-accumulateur ainsi qu'un variateur comprenant un variateur CC-CC bidirectionnel, dans lequel chaque cellule d'accumulation présente un dispositif de commande destiné à commander le bloc d'accumulation et/ou le variateur CC-CC, lequel dispositif de commande présente respectivement une interface d'entrée (5) et une interface de sortie (6) pour le raccordement à un bus série (16), **caractérisé en ce que** chaque cellule d'accumulation d'énergie est réalisée en tant qu'appareil compatible bus selon l'une quelconque des revendications 1 à 11.
